(19) Europäisches Patentamt
European Patent Office
Office européen des brevets

(11) **EP 2 144 077 A2**

(12) # EUROPEAN PATENT APPLICATION

(43) Date of publication:
**13.01.2010 Bulletin 2010/02**

(51) Int Cl.:
***G01S 5/02*** (2010.01)

(21) Application number: **09165185.1**

(22) Date of filing: **10.07.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br><br>(30) Priority: **11.07.2008 KR 20080067339**<br><br>(71) Applicant: **Gwangju Institute of Science and Technology**<br>**Buk-gu, Gwangju 500-712 (KR)** | (72) Inventors:<br>• **Ahn, Hyo-sung**<br>**500-712, Buk-gu, Gwangju (KR)**<br>• **Hur, Hwan**<br>**500-712, Buk-gu, Gwangju (KR)**<br><br>(74) Representative: **Capasso, Olga et al**<br>**De Simone & Partners S.p.A.**<br>**Via Vincenzo Bellini, 20**<br>**00198 Roma (IT)** |

(54) **Method and system for localization using one-way ranging technique**

(57)     The present invention relates to a method and system for determining a position using a one-way ranging technique. The present invention provides a method for determining a position of a target node in a wireless network, including a basic node, a first fixed node, a reference node, a target node, including: (a) calculating a time needed to directly transmit an RF signal originated from the reference node to the basic node and a time needed to arrive at the basic node via the first fixed node; (b) calculating a time needed to directly transmit the RF signal originated from the target node to the basic node and a time needed to arrive at the basic node via the first fixed node; and (c) determining the position of the target node based on the time calculated from steps (a) and (b).

[FIG. 2]

EP 2 144 077 A2

**Description**

BACKGROUND OF THE INVENTION

1. Field of the Invention

The present invention relates to a method and system for determining a position using a one-way ranging technique. More specifically, the present invention relates to a method and system for determining a position using a one-way ranging technique that measures a position of a target node using the one-way ranging technique by using only the time difference of arrival between signals originated from the target node whose position should be determined and the time difference of arrival between signals originated from a reference node and determinates the position of the target node based on the measured position of the target node.

2. Description of the Related Art

It can be understood that a wireless sensor network (WSN) means a wireless network system having distributed sensing capability and an infrastructure. It has been demonstrated that the WSN technology is useful for a ubiquitous robot application field and a ubiquitous city (U-city) business. The common goal of the ubiquitous robot application field and the U-city business is to manage and operate an area through an intellectual environment management. The intellectual management includes self-monitoring, monitoring, e-learning, health monitoring, etc. In the business, one of the technical core problems is to track a position of a mobile tag attached to a pedestrian, a mobile object, a fixed target, etc., with desired precision.

Various position-tracking technologies have been recently studied. Common representative position tracking technologies include a position tracking method using a GPS or a mobile communication network, which provide various location based services (LBS). However, there are problems in that a global position tracking technology using the GPS or the mobile communication network has low position determination accuracy as well as being difficult to use in a room or a shadowed area.

Recently, an indoor and local area position tracking technology using a local area communication technology, such as Wi-Fi, Wireless LAN (WLAN), Zigbee, Ultra-WideBand (UWB), Bluetooth, RFID, ultrasonic wave, Infrared Data Association (IrDA), etc., has been variously studied. Even though the local area position tracking technology is restricted within a range of an applicable area, it is advantageous in that it provides high accuracy within a local area.

In the local area position tracking technology, as a method for obtaining positional information on specific sensors or terminals, a method of using received signal strength (RSS) has been mainly used in the past. Recently, a ranging technology that uses time of flight (TOF) is getting attention because a time synchronization problem between devices is solved by a two-way ranging (TWR) technology. For reference, IEEE 802.15.4a Standard Adopted Chirp Spread Spectrum (CSS) or Impulse Radio Ultra Wideband (IR UWB), which uses a PHY Technology of Zigbee described in IEEE 802. 15. 4, use time information.

In particular, a CSS based communication protocol and a chipset technology control the indoor position tracking market currently. The main position tracking technology used in the CSS is a Symmetric Double Sided Two Way Ranging (SDS-TWR) technology.

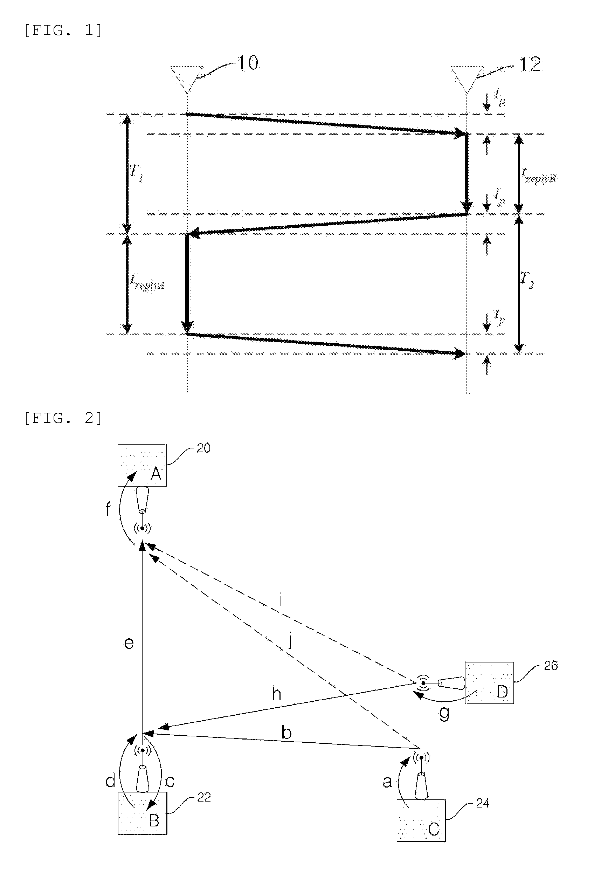

FIG. 1 is a diagram describing an SDS-TWR technology.

Since the Two-Way Ranging (TWR) technology basically uses Round-Trip Time (RTT), the time synchronization between a transmitter 10 and a receiver 12 is not needed. In FIG. 1, a basic principle of the TWR measures propagation time or time of flight (TOF) $t_p$ using round-trip time $T_1$. After the transmitter 10 transmits a signal, the receiver 12 needs response time $t_{replyB}$ until the receiver 12 transmits a response signal thereto, wherein the response time $t_{replyB}$ should be previously set. However, since a clock drift of an oscillator generally occurs, the previously set response time may include crystal offset. In order to solve the problem, the SDS-TWR calculates and uses an additional round-trip time $T_2$ as shown in FIG. 1, thereby remarkably reducing the crystal offset. However, in calculating $T_2$, response time $t_{replyA}$ in the transmitter 10 should be previously set like $t_{replyB}$.

However, the SDS-TWR technology has the following problems.

Since the SDS-TWR uses the round-trip time, the receiver and the transmitter each should have both the transmitting function and receiving function, which increases power consumption and calculation load.

In addition, the response time in the transmitter and the receiver is previously set as described above, which causes a problem in that it is impossible to reflect variable environment conditions. Further, as described above, the clock drift and the crystal offset of the oscillator serve as fundamental causes of a distance ranging error of the SDS-TWR.

Moreover, there is a problem due to the movement of the node whose position should be determined. As the node moves, the distance is changed. The longer the distance ranging delay, the more the distance ranging error is increased.

SUMMARY OF THE INVENTION

In order to solve the above problems, it is an object of the present invention to provide a method and system for determining position capable of determining a position of a target node by using a time difference of arrival between signals transmitted from the target node whose position should be determined, such that the target node whose position should be determined includes only a transmitting function, making it possible to implement a low power design and immediately reflect a change in clock drift and response time.

This invention provides a method for determining a position of a target node using a one-way ranging technique in a wireless network, including a basic node, a first fixed node, a reference node, a target node, including: (a) calculating a time when an RF signal originated from the reference node is directly transmitted to the basic node and a time when the RF signal relayed from the first fixed node arrives at the basic node; (b) calculating a time when the RF signal originated from the target node is directly transmitted to the basic node and a time when the RF signal relayed from the first fixed node arrives at the basic node ; and (c) determining the position of the target node based on the time calculated from steps (a) and (b).

Step (a) includes: (a1)transmitting the RF signal to the basic node and the first fixed node from the reference node; (a2) allowing the first fixed node to receive the RF signal originated from the reference node and relay it to the basic node; and (a3) allowing the first fixed node to calculate a relay time before being originated to the reference node after the reference node receives the RF signal from the first fixed node by using the time difference of arrival between the RF signals arriving at the basic node through each of steps (a1) and (a2).

Meanwhile, step (b) includes: (b1) transmitting the RF signal to the basic node and the first fixed node from the target node; (b2) allowing the first fixed node to receive the RF signal originated from the target node and relay it to the basic node; and (b3) calculating the time difference of arrival between the RF signals arriving at the basic node through each of steps (b1) and (b2).

In addition, the RF signal follows a chirp spread spectrum manner or an impulse radio ultra wideband manner.

There is provided a method for determining position according to another embodiment of the present invention using a one-way ranging technique, including: (a) calculating a time when an RF signal originated from a reference node is directly transmitted to a basic node and a time when the RF signal relayed from a first fixed node arrives at the basic node; (b) calculating a time when the RF signal originated from a target node is directly transmitted to the basic node and a relative position with respect to the basic node and the first fixed node of the target node by using results of step (a); (c) measuring a relative position with respect to the basic node and a second fixed node of the target node based on the time calculated from performing steps (a) and (b) on the second fixed node; and (d) determining a position of the target node by using results of steps (b) and (c).

Further, there is provided a system for determining position according to the present invention, including: a target node including at least transmitting function and whose position should be determined; a reference node including at least a transmitting function and whose position is known; at least two fixed nodes including a receiving function and a transmitting function and whose position is known; a basic node including at least receiving function and whose position is known; and a position calculating engine determining the position of the target node by using the difference between a time when the RF signal originated from each of the target node and the reference node is relayed through the fixed node and arrives at the basic node and a time when the RF signal originated from each of the target node and the reference node directly arrives at the basic node.

With the present invention, the node whose position should be determined includes only the transmitting function, making it possible to reduce power consumption and the node does not include the receiving function, making it possible to achieve a reduced size.

With the present invention, the error due to the clock drift of the oscillator can be removed and the distance ranging error due to the difference in the response time of each node can be removed, making it possible to remove the inaccuracy of the distance ranging due to the change in the surrounding environment.

BRIEF DESCRIPTION OF THE DRAWINGS

FIG. 1 is a diagram describing an SDS-TWR technology;
FIG. 2 is a diagram for describing a one-way ranging technique in a method for determining a position according to a preferred embodiment of the present invention;
FIG. 3 is a diagram showing a system for determining a position using the one-way ranging technique according to the preferred embodiment of the present invention; and
FIG. 4 is a flowchart showing the method for determining a position using the one-way ranging technique according to the preferred embodiment of the present invention.

DETAILED DESCRIPTION OF THE PREFERRED EMBODIMENTS

Hereinafter, preferred embodiments of the present invention will be described in detail with reference to the accompanying drawings. First of all, it is to be noted that in giving reference numerals to elements of each drawing, like reference numerals refer to like elements even though like elements are shown in different drawings. Further, in describing the present invention, well-known functions or constructions will not be described in detail since they may unnecessarily obscure the understanding of the present invention. Hereinafter, the preferred embodiment of the present invention will be described, but it will be understood to those skilled in the art that the spirit and scope of the present invention are not limited thereto and various modifications and changes can be made.

A system for determining a position according to the present invention determinates a position of a target node whose position should be determined using a one-way ranging technique.

Hereinafter, the one-way ranging technique is first described and a method for determining a position of a target node is then described using time difference of arrival (TDOA) for a basic node and a fixed node of a target node obtained using a one-way ranging technique.

One-Way Ranging Technique

FIG. 2 is a diagram for describing a one-way ranging technique in a method for determining a position according to a preferred embodiment of the present invention.

In order to perform the one-way ranging technique for the method for determining a position according to the preferred embodiment of the present invention, it includes a basic node 20, a first fixed node 22, a reference node 26, and a target node 24.

The installation position of the basic node 20 and the first fixed node 22 is previously known. Preferably, the basic node 20 and the first fixed node 22 may be fixed at specific positions.

The basic node 20 includes at least receiving function of a transmitting function and a receiving function.

The first fixed node 22 includes all the transmitting function and receiving function.

The reference node 26 includes at least transmitting function and the position thereof is previously known.

The target node 24 includes the transmitting function and may not include the receiving function.

The communication among the basic node 20, the first fixed node 22, the reference node 26, and the target node 24 uses a wireless communication manner that can obtain time information, such as Chirp Spread Spectrum (CSS), Impulse Radio Ultra Wideband (IR-UWB).

Further, the basic node 20, the first fixed node 22, the reference node 26, and the target node 24 may be a node that configures a wireless sensor network. Herein, the basic node 20 may be a central server of the wireless sensor network.

A position calculating engine for determining the position of the target node 24 may be included in the basic node 20 or in another server receiving the time information from the basic node 20.

In FIG. 2, a, b, c, d, e, f, g, h, i, and j mean a time consumed to perform each process with respect to a time axis. Specifically, a means an RF signal transmitting time up to an antenna of the reference node 26 in a processing device of the reference node 26, b means an RF signal propagating time up to an antenna of the first fixed node 22 in the antenna of the reference node 26, c means an RF signal arriving time up to the processing device of the first fixed node 22 in the antenna of the first fixed node 22, d means an RF signal transmitting time up to the antenna of the first fixed node 22 in the processing device of the first fixed node 22, e means an RF signal propagating time up to the antenna of the basic node 20 in the antenna of the first fixed node 22, f means an RF signal arriving time up to the processing device of the basic node 20 in the antenna of the basic node 20, g means an RF signal transmitting time up to the antenna of the reference node 26 in the processing device of the reference node 26, h means an RF signal transmitting time from the antenna of the reference node 26 to the antenna of the first fixed node 22, i means an RF signal propagating time from the antenna of the reference node 26 to the antenna of the basic node 20, and j means an RF signal propagating time from the antenna of the target node 24 to the antenna of the basic node 20.

In FIG. 2, the time difference of arrival (TDOA), which is the time difference of arrival, where the RF signal of the target node 24 arrives at the basic node 20 and the first fixed node 22, respectively, is j-b. The relative position of the target node 24 can be confirmed by using the TDOA.

For convenience of explanation, in indicating a starting node, a via node, and an arrival node, the basic node 20 uses A, the first fixed node 22 uses B, the target node 24 is C, and the reference node 26 uses D, all of A, B, C, and D are a subscript.

In $t=t_0$, when the reference node 26 transmits a signal, $T_{DA}=t_0+g+i+f$ and $T_{DBA}=t_0+g+h+c+d+e+f$. Since the positions of the basic node 20, the first fixed node 22, and the reference node 26 are known, they are calculated by $i=l_i/v_c$, $h=l_h/v_c$, and $e=l_e/v_c$, where $l_i$ is a distance between the reference node 26 and the basic node 20, $l_h$ is a distance between the reference node 26 and the first fixed node 22, $l_e$ is a distance between the first fixed node 22 and the basic node 20, and $v_c$ is a transmission speed of a signal (that is, speed of light).

c+d is calculated according to the following Equation 1 by using $T_{DBA}$ and $T_{DA}$.

[Equation 1]

$$c+d=T_{DBA}-T_{DA}-h-e+i$$

In the same manner, when the target node 24 transmits a signal at t=t1, a time when the signal arrives at the basic node 20 is $T_{CA}=t_1+a+j+f$. On the other hand, a time when the signal arrives at the basic node 20 through the first fixed node 22 from the target node 24 is $T_{CBA}=t_1+a+b+c+d+e+f$. Therefore, the time difference of arrival (TDOA) where the RF signal of the target node 24 arrives at the basic node 20 and the first fixed node 22 is j-b and is calculated according to Equation 2.

[Equation 2]

$$j-b=T_{CA}-t_1-a-f-(T_{CBA}-t_1-a-c-d-e-f)$$
$$=T_{CA}-T_{CBA}+c+d+e$$

c+d is calculated by Equation 1 and e is previously known as $e=l_e/v_c$. Meanwhile, the difference ($T_{DBA}-T_{DA}$) between a time when the RF signal arrives at the basic node 20 via the first fixed node 22 from the reference node 26 and a time when the RF signal directly arrives at the basic node 20 from the reference node 26 and the difference ($T_{CA}-T_{CBA}$) between a time when the RF signal arrives at the basic node 20 via the first fixed node 22 from the target node 24 and a time when the RF signal directly arrives at the basic node from the target node 24 can be calculated in the basic node 20, such that the time difference j-b of arrival can be finally represented by the following Equation 3.

[Equation 3]

$$j-b=\Delta T_{CA}^{CBA}-\Delta T_{DA}^{DBA}-h+i$$

In Equation 3, $\Delta T_{CA}^{CBA}=T_{CA}-T_{CBA}$ and $\Delta T_{DA}^{DBA}=T_{DBA}-T_{DA}$.

Meanwhile, in Equations 1 and 2, $T_{DA}$, $T_{DBA}$, $T_{CA}$, and $T_{CBA}$ are measured based on the oscillator included in the basic node 20. Considering the crystal clock drift ($e_A$) in the basic node 20, Equations 1 and 2 can be represented like Equations 4 and 5 and Equation 3 can be represented like Equation 6.

[Equation 4]

$$c+d=T_{DBA}(1+e_A)-T_{DA}(1+e_A)-h-e+i$$

[Equation 5]

$$j-b=T_{CA}(1+e_A)-T_{CBA}(1+e_A)+c+d+e$$

[Equation 6]

$$j-b=(\Delta T_{CA}^{CBA}-\Delta T_{DA}^{DBA})(1+e_A)-h+i$$

In the above Equations, Equation 3 is an ideal value for the time difference j-b of arrival between a where the signal arrives at from the target node 24 to the basic node 20 and a time when the signal arrives from the target node 24 to the first fixed node 22 and it can be understood that Equation 6 is a real value. At this time, the difference between the real value and the ideal value will be $(\Delta T_{CA}^{CBA}-\Delta T_{DA}^{DBA})e_A$ .

Position Determination

Only the relative position of the target node 24 with respect to the basic node 20 and the first fixed node 22 can be confirmed by the foregoing one-way ranging technique. In other words, according to Equation 3 or Equation 6, the time difference j-b of arrival can be confirmed based on the time difference measured in the basic node 20. The distance $l_j$ between the target node 24 and the basic node 20 and the distance $l_b$ between the target node 24 and the first fixed node 22 can be obtained according to Equation 7.

[Equation 7]

$$l_j-l_b=(j-b)v_c$$

If the basic node 20, the first fixed node 22, and the target node 24 are positioned on the same plane, the target node 24 is positioned on a hyperbola having the basic node 20 and the first fixed node 22 as a focus. Therefore, the accurate position of the target node 24 cannot be determined.

In order to determinate the accurate position of the target node 24, another fixed node (assumed to be 'second fixed node 28') is needed. The difference between a time when the signal from the target node 24 arrives at the basic node 20 and a time when the signal from the target node 24 arrives at the second fixed node 28 is obtained by applying the one-way ranging technique to the second fixed node 28 in the same manner as in the first fixed node 22.

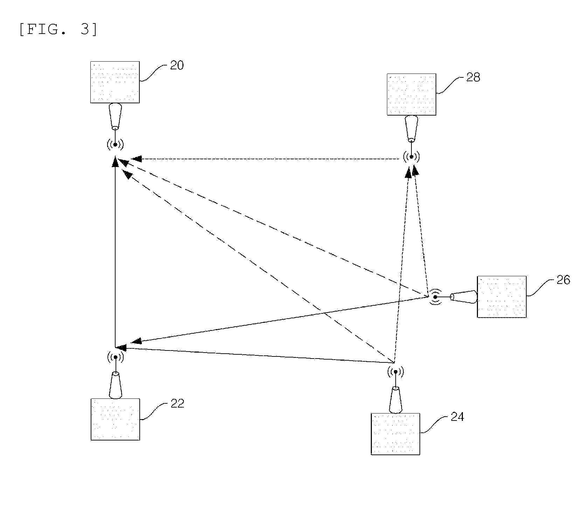

FIG. 3 is a diagram showing a system for determining a position using the one-way ranging technique according to the preferred embodiment of the present invention.

In FIG. 3, the second fixed node 28 is added to the configuration shown in FIG. 2. In order to further increase the accuracy of the position determination, it is preferred that an additional fixed node in addition to the second fixed node 28 is provided. When a plurality fixed nodes are provided, the reference node 26 may be omitted. The reason is that the position of the reference node 26 is previously known and includes at least a transmitting function and when at least two fixed nodes are provided, any one fixed node can perform a role of the reference node 26. For example, for the first fixed node 22, the second fixed node 28 performs a function of a reference node 26 of FIG. 2 and for the second fixed node 28, the first fixed node 22 performs a function of the reference node 26 of FIG. 2.

Assuming that the system for determining a position includes N fixed nodes, a generalized calculation equation for determining the position of the target node 24 will be described below. The more detailed description thereof is described in "Networked-Based Wireless Location" (IEEE Signal Processing Magazine, vol. 22, no. 4, pp. 24-40, 2005) by H. Sayed, A. Ta Righat and N. Khajehnouri.

Assume that a coordinate of the target node 24 is $p = [x, y]^T$ and a coordinate of the basic node 20 is $[0, 0]^T$. Coordinates of N fixed nodes are represented by $[x_i, y_i]^T (i=1, ..., N)$. Then, the coordinate of the target node 24 is determined according to Equation 8.

[Equation 8]

$$\hat{p} = (H^T H)^{-1} H^T (l_j u + v)$$

In Equation 8,

$$H = \begin{bmatrix} x_1 & y_1 \\ x_2 & y_2 \\ x_3 & y_3 \\ \cdot & \cdot \\ x_N & y_N \end{bmatrix}; \quad u = \begin{bmatrix} l_{1o} \\ l_{2o} \\ l_{3o} \\ \cdot \\ l_{No} \end{bmatrix}; \quad v = \frac{1}{2} \begin{bmatrix} K_1^2 - l_{1o}^2 \\ K_2^2 - l_{2o}^2 \\ K_3^2 - l_{3o}^2 \\ \cdot \\ K_N^2 - l_{No}^2 \end{bmatrix}$$

and $\quad l_{io} = (l_j - l_b)_i ; \quad K_i = \sqrt{x_i^2 + y_i^2} \quad l_{io} = (l_j - l_b)_i \quad$ is $(l_j - l_b)$ for an i-th fixed node.

In Equation 8, however, the distance $l_j$ between the target node 24 and the basic node 20 is an unknown value. Therefore, in order to obtain the value, a quadratic equation of x and y should be solved according to the following Equation 9.

[Equation 9]

$$\begin{bmatrix} x \\ y \end{bmatrix} = (H^T H)^{-1} H^T (\sqrt{x^2 + y^2} u + v)$$

In order to obtain the solution of Equation, Equations 10 and 11 are defined as follows.

[Equation 10]

$$\begin{bmatrix} \alpha \\ \beta \end{bmatrix} = (H^T H)^{-1} H^T u$$

[Equation 11]

$$\begin{bmatrix} \gamma \\ \delta \end{bmatrix} = (H^T H)^{-1} H^T \mathbf{v}$$

In the relationship of Equations 10 and 11, $x = \dfrac{\alpha}{\beta} y + \eta, \ \eta = -\dfrac{\alpha}{\beta} \delta + \gamma$ and y becomes the solution of the following Equation 12.

[Equation 12]

$$(\alpha^2 + \beta^2 - 1)y^2 + 2(\eta\alpha\beta + \delta)y + \eta^2\beta^2 - \delta^2 = 0$$

Two pairs of solutions are obtained from Equation 12 and a true solution is determined according to the following Equation 13.

[Equation 13]

$$(x, y) = \begin{cases} (\widehat{x}_1, \widehat{y}_1), & \text{if } \|\vartheta^1\| \leq \|\vartheta^2\| \\ (\widehat{x}_2, \widehat{y}_2), & \text{else} \end{cases}$$

In Equation 13, $\vartheta^j = (\vartheta_1^j, \vartheta_2^j, \ldots, \vartheta_N^j)^T, j = 1, 2$,

$\vartheta_i^j = |\widehat{d}_i^j| - |L_{io}|$ and $\widehat{d}_i^j$ is obtained according to Equation 14.

[Equation 14]

$$\widehat{d}_i^j = \left\| \begin{bmatrix} x_i \\ y_i \end{bmatrix} - \begin{bmatrix} \widehat{x}_j \\ \widehat{y}_j \end{bmatrix} \right\| - \left\| \begin{bmatrix} \widehat{x}_j \\ \widehat{y}_j \end{bmatrix} \right\|,$$
$$i = 1, \ldots, n$$

The method for determining a position using the one-way ranging technique according to the preferred embodiment of the present invention will be described based on the foregoing description.

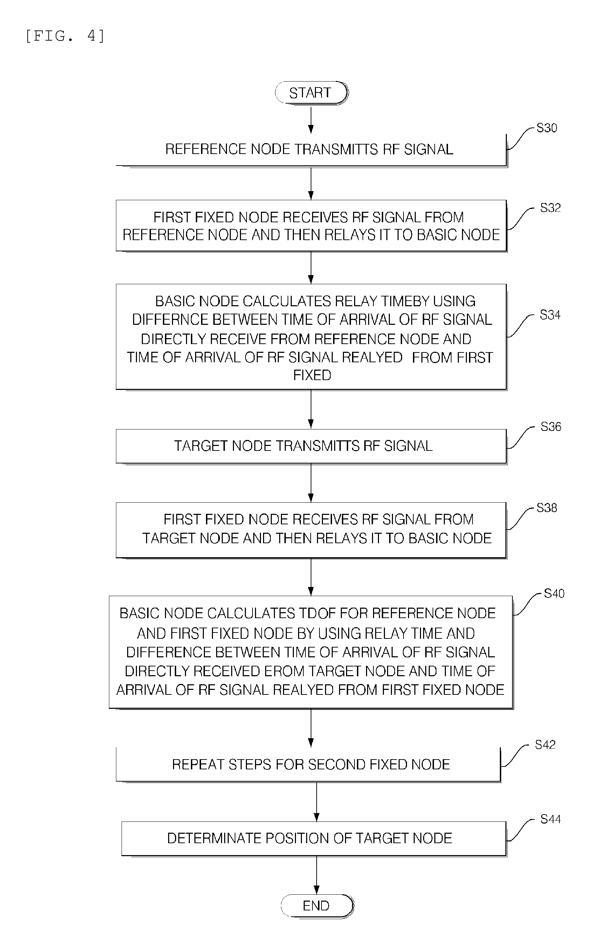

FIG. 4 is a flowchart showing the method for determining a position using the one-way ranging technique according to the preferred embodiment of the present invention.

The system for determining a position to perform the method for determining a position according to FIG. 4 includes one basic node 20, at least two fixed nodes, and the target node 24 and further includes the reference node 26 whose position is known. However, as described above, the reference node 26 may be omitted and other fixed nodes can also perform a role of the reference node 26.

First, the reference node originates the RF signal for ranging (S30).

The first fixed node receives the RF signal from the reference node and transmits it to the basic node (S32).

The basic node calculates a relay time c+d consumed to relay the RF signal from the first fixed node by using the time difference of arrival between the RF signal directly received from the reference node and the RF signal received from the first fixed node (S34).

Herein, the relay time means a consumed time for the first fixed node to receive the RF signal, process it, and transmit it to the basic node.

Next, the target node originates the RF signal for ranging (S36).

The first fixed node receives the RF signal from the target node and transmits it to the basic node (S38).

The basic node calculates the time difference j-b of arrival for the basic node 20 and the first fixed node 22 of the target node 24 by using the time difference of arrival between the RF signal directly received from the target node and the RF signal received from the first fixed node and the relay time of the first fixed node calculated in step S34.

Steps S30 to S40 are repetitively performed on the second fixed node (S42). When there are other fixed nodes in addition to the second fixed node, step S42 is repetitively performed on other fixed nodes. Of course, the position of the target node can be determined by using only two fixed nodes. However, the more the number of fixed nodes, the more the accuracy is improved. However, when the number of fixed nodes is increased, the processing time is increased. As a result, it is preferable to set the appropriate number of fixed nodes from the correlation between the accuracy and the processing time according to the embodiment of the present invention.

Steps are performed on at least two fixed nodes and the position of the target node is then determined by using the time difference of arrival (S44). If there are other target nodes, then steps S30 to S44 are repetitively performed to determinate the positions of other target nodes.

In the above description, the RF signal origination of the reference node and the target node is considered as being achieved in a broadcasting manner without specifying the receiving target. However, in the real implementation, the transmission of the RF signal can also be achieved by specifying the receiving target.

For example, when each node is configured using a nanoLOC TRX chipset of Nanotron Technologies GmbH, the packet data, which are transmitted for ranging, include destination addresses. Therefore, when using the nanoLOC TRX, the RF signal can not be simultaneously transmitted from the target node or the reference node to the basic node and the fixed node. Therefore, in this case, when transmitting the RF signal from the target node and the reference node, the ranging packet data using the basic node as the destination address and the ranging packet data using the fixed node as the destination node should be transmitted at the time difference. Even in this case, the method for determining a position according to the present invention uses TDOF and therefore, the application thereof does not have any problems.

The spirit of the present invention has been just exemplified. It will be appreciated by those skilled in the art that various modifications, changes, and substitutions can be made without departing from the essential characteristics of the present invention. Accordingly, the embodiments disclosed in the present invention and the accompanying drawings are used not to limit but to describe the spirit of the present invention. The scope of the present invention is not limited only to the embodiments and the accompanying drawings. The protection scope of the present invention must be analyzed by the appended claims and it should be analyzed that all spirits within a scope equivalent thereto are included in the appended claims of the present invention.

**Claims**

1. A method for determining a position of a target node using a one-way ranging technique in a wireless network, including a basic node, a first fixed node, a reference node, and a target node, comprising:

    (a) calculating a time when an RF signal originated from the reference node is directly transmitted to the basic node and a time when the RF signal relayed from the first fixed node arrives at the basic node;
    (b) calculating a time when the RF signal originated from the target node is directly transmitted to the basic node and a time when the RF signal relayed from the first fixed node arrives at the basic node ; and
    (c) determining the position of the target node based on the time calculated from steps (a) and (b).

2. The method for determining a position according to claim 1, wherein step (a) includes:

    (a1) transmitting the RF signal to the basic node and the first fixed node from the reference node;
    (a2) allowing the first fixed node to receive the RF signal originated from the reference node and relay it to the basic node; and

(a3) allowing the first fixed node to calculate a relay time before being originated to the reference node after the reference node receives the RF signal from the first fixed node by using the time difference of arrival between the RF signals arriving at the basic node through each of steps (a1) and (a2).

3. The method for determining a position according to claim 1, step (b) includes:

(b1) transmitting the RF signal to the basic node and the first fixed node from the target node;
(b2) allowing the first fixed node to receive the RF signal originated from the target node and relay it to the basic node; and
(b3) calculating the time difference of arrival between the RF signals arriving at the basic node through each of steps (b1) and (b2).

4. The method for determining a position according to claim 1, wherein the RF signal follows a chirp spread spectrum manner or an impulse radio ultra wideband manner.

5. The method for determining a position according to claim 1, wherein step (a) allows the reference node to sequentially transmit the RF signal to the basic node and the first fixed node and, step (b) allows the target node to sequentially transmit the RF signal to the basic node and the first fixed node.

6. A method for determining a position of a target node using a one-way ranging technique in a wireless network, including a basic node, at least two fixed nodes, a reference node, and a target node, comprising:

(a) calculating a time when an RF signal originated from the reference node is directly transmitted to the basic node and a time when the RF signal relayed from a first fixed node arrives at the basic node;
(b) calculating a time when the RF signal originated from a target node is directly transmitted to the basic node and a relative position with respect to the basic node and the first fixed node of the target node by using results of step (a);
(c) measuring a relative position with respect to the basic node and a second fixed node of the target node based on the time calculated from by performing steps (a) and (b) on the second fixed node; and
(d) determining a position of the target node by using results of steps (b) and (c).

7. The method for determining a position according to claim 6, wherein step (a) includes:

(a1) transmitting the RF signal to the basic node and the first fixed node from the reference node;
(a2) allowing the first fixed node to receive the RF signal originated from the reference node and relay it to the basic node; and
(a3) allowing the first fixed node to calculate a relay time before being originated to the reference node after the reference node receives the RF signal from the first fixed node by using the time difference of arrival between the RF signals arriving at the basic node through each of steps (a1) and (a2).

8. The method for determining a position according to claim 6, step (b) includes:

(b1) transmitting the RF signal to the basic node and the first fixed node from the target node;
(b2) allowing the first fixed node to receive the RF signal originated from the target node and relay it to the basic node;
(b3) calculating the time difference of arrival between the RF signals arriving at the basic node through each of steps (b1) and (b2).
(b4) determining the relative position of the target node by using the time difference of arrival between a time when the RF signal arrives at the basic node through the first fixed node from the reference node and a time when the RF signal directly arrives at the basic node and the time difference of arrival between a time when the RF signal arrives at the basic node through the first fixed node from the target node and a time when the RF signal directly arrives at the basic node.

9. The method for determining a position according to claim 6, wherein step (a) allows the reference node to sequentially transmit the RF signal to the basic node and the first fixed node and, step (b) allows the target node to sequentially transmit the RF signal to the basic node and the first fixed node.

10. A system for determining position, comprising:

a target node including at least transmitting function and whose position should be determined;
a reference node including at least transmitting function and whose position is known;
at least two fixed nodes including a receiving function and a transmitting function and whose position is known;
a basic node including at least receiving function and whose position is known; and
a position calculating engine determining the position of the target node by using the difference between a time when the RF signal originated from each of the target node and the reference node is relayed through the fixed node and arrives at the basic node and a time when the RF signal originated from each of the target node and the reference node directly arrives at the basic node.

11. The system for determining a position according to claim 10, wherein the RF signal follows a chirp spread spectrum manner or an impulse radio ultra wideband manner.

12. The system for determining a position according to claim 10, wherein the target node and the reference node broadcast the RF signal.

13. The system for determining a position according to claim 10, wherein the target node and the reference node includes and transmits a destination address in a packet data included in the RF signal.

[FIG. 1]

[FIG. 2]

[FIG. 3]

[FIG. 4]

```
                        ┌─────────────┐
                        │    START    │
                        └─────────────┘
                               │
                               ▼
        ┌────────────────────────────────────────────┐  ⌐S30
        │    REFERENCE NODE TRANSMITTS RF SIGNAL      │
        └────────────────────────────────────────────┘
                               │
                               ▼
        ┌────────────────────────────────────────────┐  ⌐S32
        │    FIRST FIXED NODE RECEIVES RF SIGNAL FROM │
        │  REFERENCE NODE AND THEN RELAYS IT TO BASIC NODE │
        └────────────────────────────────────────────┘
                               │
                               ▼
        ┌────────────────────────────────────────────┐  ⌐S34
        │    BASIC NODE CALCULATES RELAY TIMEBY USING │
        │  DIFFERNCE BETWEEN TIME OF ARRIVAL OF RF SIGNAL │
        │    DIRECTLY RECEIVE FROM REFERENCE NODE AND │
        │  TIME OF ARRIVAL OF RF SIGNAL REALYED  FROM FIRST │
        │                   FIXED                     │
        └────────────────────────────────────────────┘
                               │
                               ▼
        ┌────────────────────────────────────────────┐  ⌐S36
        │       TARGET NODE TRANSMITTS RF SIGNAL      │
        └────────────────────────────────────────────┘
                               │
                               ▼
        ┌────────────────────────────────────────────┐  ⌐S38
        │    FIRST FIXED NODE RECEIVES RF SIGNAL FROM │
        │   TARGET NODE AND THEN RELAYS IT TO BASIC NODE │
        └────────────────────────────────────────────┘
                               │
                               ▼
        ┌────────────────────────────────────────────┐  ⌐S40
        │  BASIC NODE CALCULATES TDOF FOR REFERENCE NODE │
        │     AND FIRST FIXED NODE BY USING RELAY TIME AND │
        │   DIFFERENCE BETWEEN TIME OF ARRIVAL OF RF SIGNAL │
        │    DIRECTLY RECEIVED EROM TARGET NODE AND TIME OF │
        │  ARRIVAL OF RF SIGNAL REALYED FROM FIRST FIXED NODE │
        └────────────────────────────────────────────┘
                               │
                               ▼
        ┌────────────────────────────────────────────┐  ⌐S42
        │       REPEAT STEPS FOR SECOND FIXED NODE    │
        └────────────────────────────────────────────┘
                               │
                               ▼
        ┌────────────────────────────────────────────┐  ⌐S44
        │      DETERMINATE POSITION OF TARGET NODE    │
        └────────────────────────────────────────────┘
                               │
                               ▼
                        ┌─────────────┐
                        │     END     │
                        └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. Sayed ; A. Ta Righat ; N. Khajehnouri.** Networked-Based Wireless Location. *IEEE Signal Processing Magazine,* 2005, vol. 22 (4), 24-40